# EUROPEAN PATENT SPECIFICATION

(11) **EP 1 093 997 B1**
(45) Date of publication and mention of the grant of the patent: **12.01.2005**
(21) Application number: 00122729.7
(22) Date of filing: 18.10.2000
(51) Int. Cl.: B62J 1/00, A47C 7/20, B32B 27/12

(54) **Seat for vehicles**
Fahrzeugsitz
Siège de véhicule

(30) Priority: 19.10.1999 JP 29629599
(43) Date of publication of application: 25.04.2001
(73) Proprietor: TS Tech Co., Ltd, Asaka-shi, Saitama 351-0012 (JP); Honda Giken Kogyo Kabushiki Kaisha, Minato-ku, Tokyo (JP)
(72) Inventor: Hasegawa, Kenichi, c/o TS Tech Co., Ltd., Asaka-shi, Saitama 351-0012 (JP); Miyajima, Iwao, c/o TS Tech Co., Ltd., Asaka-shi, Saitama 351-0012 (JP); Tanaka,Tetsuharu, c/o K.K.Honda Gijyutsu Kenkyusho, Wako-shi, Saitama 351-0113 (JP); Yoshida,Takeshi, c/o K.K.Honda Gijyutsu Kenkyusho, Wako-shi, Saitama 351-0113 (JP); Tomizawa,Tsutomu, c/o K.K.Honda Gijyutsu Kenkyusho, Wako-shi, Saitama 351-0113 (JP); Yamaguchi,Masaaki, c/o KK.Honda Gijyutsu Kenkyusho, Wako-shi, Saitama 351-0113 (JP)
(74) Representative: Grünecker, Kinkeldey, Stockmair & Schwanhäusser Anwaltssozietät

(56) References cited:
- EP-A- 0 286 409
- EP-A- 0 569 955
- WO-A-98/55352
- GB-A- 1 052 632
- US-A- 3 833 259
- US-A- 5 954 403
- PATENT ABSTRACTS OF JAPAN vol. 014, no. 147 (M-0952), 20 March 1990 (1990-03-20) & JP 02 011482 A (TOKYO SEAT KK), 16 January 1990 (1990-01-16)

## Description

The present invention relates to a seat for vehicles (hereinafter referred to as a vehicle seat), and more particularly to a lightweight seat which can be conveniently recycled.

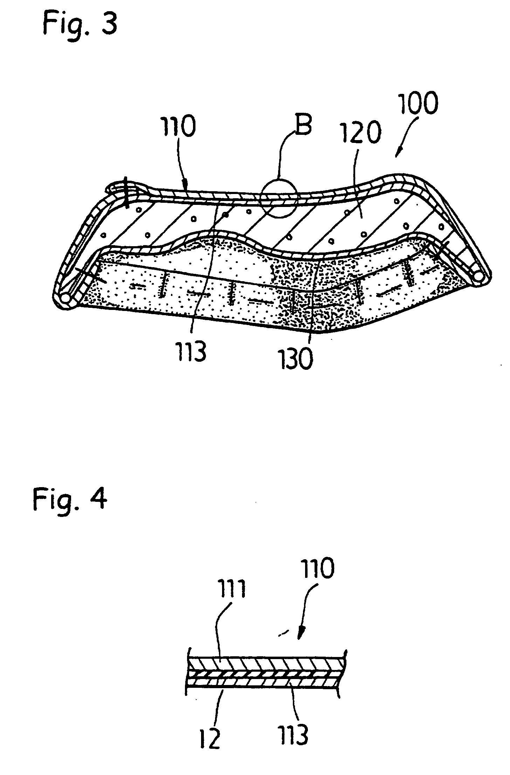

As shown in FIG. 3, a vehicle seat 100 typically includes a surface layer 110, a cushion layer 120, and a bottom plate 130. Conventionally, various materials have been employed to form the respective layers and plate. For example, the surface layer 110 has been formed of a laminate consisting of polyvinyl chloride layer (such as an artificial leather made of polyvinyl chloride) 111 laminated onto a substrate cloth 112 made of material such as nylon, polyester, rayon, or cotton. Polyurethane foam has been employed to form the cushion layer 120, and polypropylene has been employed to form the bottom plate 130.

In recent years, with demands to protect the global environment and the necessity for effective utilization of resources becoming more acute, fuel economy and improved recycling have become issues of great concern in the area of transportation. Thus, there has been growing demands for lightweight components that can improve fuel economy and for components which can be easily recycled.

When the surface layer 110 of a conventional vehicle seat 100 is torn and water (e.g., rain water) invades the seat, urethane foam that constitutes the cushion layer 120 of the seat may absorb moisture, causing hydrolysis.

Consequently, the moisture-absorbed portion of the cushion layer may become deformed or stiff, making the seat uncomfortable.

In order to prevent the above-described deterioration in the cushion layer 120 caused by the absorbed water, as shown in FIGs. 3 and 4, there has been known a conventional technique such that a waterproof film 113 is sandwiched between the surface layer 110 and the cushion layer 120. However, this technique has the disadvantage of involving a high production cost and an increased number of process steps, due to an increased number of components.

Further, a vehicle seat covered with a polyvinyl chloride layer has drawbacks in that the surface produces a vinyl-like gloss and fails to give a luxurious impression.

JP-A-02011482 relates to a water resistant sheet, comprising a first and a second cushion substance being placed on the upper surface of a bottom plate. The bottom plate and cushion substances are covered with a skin material. Polypropylene may be used as a material for the first cushion substance, and polyethylene may be used as a material for the second cushion substances.

JP-A-020 11 482 discloses all the features of the preamble of claim 1.

WO-A-9855352 relates to a bicycle saddle comprising a first layer of a first, energy-absorbing, closed-cell foam material having a first density, such as a crosslinked polyethylene foam, and further a second layer of a second, energy-absorbing closed cell foam material having a second density, such as a crosslinked polyethylene foam.

It was the object of the present invention to provide a lightweight vehicle seat which can be easily recycled, and which has good appearance and exhibits excellent waterproofing properties. As used herein, examples of the vehicle seat include seats used for motorcycles, scooters, snowmobiles, jet skis, beach buggies, mountable-type vehicles, and construction machinery.

This object is achieved by a vehicle seat comprising:
a bottom plate (30), a cushion layer (20) formed of polyethylene foam and disposed on the bottom plate (30), and a surface layer (10) covering the cushion layer, characterized in that the bottom plate (30) is formed of polypropylene foam and
the surface layer (10) is formed of a laminate containing a layer of a thermoplastic olefinic elastomer (11) and a substrate cloth (12) made of polypropylene fiber.

As described above, the vehicle seat of the present invention is constituted such that the surface layer is formed of a laminate containing a layer of thermoplastic olefinic elastomer and a substrate cloth made of polypropylene fiber; that the cushion layer is formed of polyethylene foam; and that the bottom plate is formed of polypropylene foam. Accordingly, employment of olefinic resin for all of the surface layer, the cushion layer, and the bottom plate allows less laborious recovery, easy refuse consolidation, and thus easy recycling of the material.

The aforementioned materials which are employed for forming the surface layer, the cushion layer, and the bottom plate have a low specific gravity as compared with conventional materials; i.e., polyvinyl chloride for the surface layer, and polyurethane foam for the cushion layer. In addition, because the vehicle seat of the present invention comprises a bottom plate formed of polypropylene foam, the seat is lightweight and fuel economy is improved.

The polyethylene foam employed in the cushion layer has excellent waterproof properties. Therefore, even when the surface layer is torn and water (e.g. rain water) invades the seat, the cushion layer is neither deformed nor hardened and the seat remains comfortable to sit upon. Thus, in the present invention, since there is no need to provide waterproof film on the cushion layer, it is possible to solve the aforementioned problems; such as an increase in production cost and in the number of production steps caused by the increased number of components.

Since thermoplastic olefinic elastomer, serving as the material for the surface layer, has excellent imprinting properties, fine embossment patterns formed on an embossing plate are transferred clearly onto the surface layer. Thus, the surface layer exhibits the luxurious appearance of genuine leather.
FIG. 1 is a sectional view of a vehicle seat according to the present invention;
FIG. 2 is an enlarged view of portion A in FIG. 1;
FIG. 3 is a sectional view of a conventional vehicle seat; and
FIG. 4 is an enlarged view of portion B in FIG. 3.

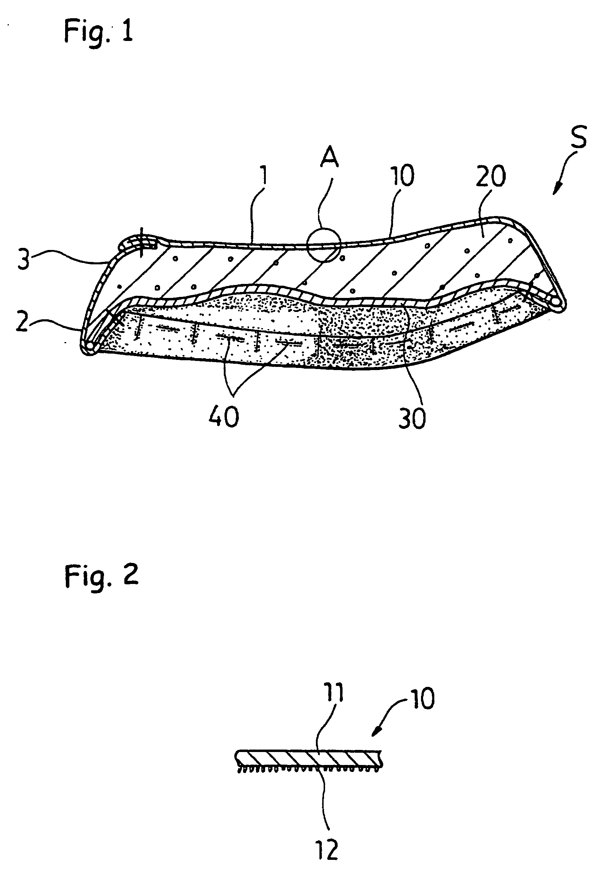

FIGs. 1 and 2 show a vehicle seat according to one embodiment of the present invention. FIG. 1 is a cross-sectional view of the vehicle seat; and FIG. 2 is an enlarged view of the portion denoted by "A" in FIG. 1.

As shown in FIG. 1, the vehicle seat S comprises a surface layer 10, a cushion layer 20, and a bottom plate 30. The cushion layer 20 is placed on the bottom plate 30 and covered with the surface layer 10.

First, the material for the surface layer 10 will be described. As shown in FIG. 2, the surface layer 10 is composed of a layer 11 of thermoplastic olefinic elastomer and a substrate cloth 12 of polypropylene fiber. The present embodiment employs an artificial leather of thermoplastic olefinic elastomer leather whose resin portion is constituted by polypropylene. Among a variety of thermoplastic elastomers, olefinic thermoplastic elastomers are suited for the purposes of the present invention in that they are endowed with low specific gravity, excellent resistance to heat-degradation, resistance to coldness, weatherability, and excellent electrical properties. In order to impress patterns onto the surface layer 10, an embossing plate is used. Since thermoplastic olefinic elastomer used as the material for the surface layer 10 has excellent impressing properties, fine patterns formed on the embossing plate are transferred clearly onto the surface layer 10.

The substrate cloth 12 is formed of a woven fabric of polypropylene yarns made of polypropylene fiber. The substrate cloth 12 is laminated with the layer 11 of olefinic thermoplastic elastomer through a known method comprising pressing, heating, and curing. The substrate cloth 12 is sandwiched between the surface layer 10 and the cushion layer 20. Therefore, sliding of the surface layer 10 on the cushion layer 20 is prevented. Further, even when the surface layer is torn or scratched, dust or rain water does not invade the cushion layer.

The outer surface of the surface layer 10 can be embossed with any chosen pattern, to thereby impart a leather-like texture and appearance. Embossing can be performed by use of a known machine such as a lithographic press or a roll-embossing machine. By use of such a machine, the pattern of an embossing plate is transferred under heat or pressure to the surface of the surface layer.

In the present embodiment, as shown in FIG. 1, the surface layer 10 is formed by two portions which are sewed into a three-dimensional shape. The two portions are sewed at a ridge line 3 located between a seat surface portion 1 and a side surface portion 2. Needless to say, any other jointing method, such as vacuum forming or welding, other than the above-described method of sewing two portions of the surface layer 10 may be used to form the surface layer 10 into a three-dimensional shape.

The peripheral edge of the surface layer 10 is fixed to the bottom plate 30. Specifically, the edge of the surface layer 10 is fixed to the peripheral edge of the bottom plate 30 by use of staples 40 or the like, and, if necessary, by use of an adhesive.

The cushion material 20 is formed of polyethylene foam. The polyethylene foam is fabricated through foaming of pellets or powder of polyethylene containing a foaming agent. The cushion material 20 is formed into a seat shape having a predetermined contour. This step can be performed in advance and the resultant mold is then bonded to the surface layer by use of an adhesive or the like. Alternatively, the cushion material 20 may be integrated with the surface layer during formation of the surface layer, which eliminates the bonding work.

The bottom plate 30 is formed of polypropylene foam. The polypropylene foam is fabricated through foaming of polypropylene pellets or powder in the presence of a foaming agent. Since the bottom plate 30 is a member serving as a base portion of the vehicle seat, the bottom plate 30 is formed of hard foam.

The present embodiment has been described with reference to the structure of a seat for a motorcycle in which a cushion material is placed on the bottom plate. However, with a seat having a different structure; e.g., a seat for construction machinery, the cushion material 20 is placed on a frame serving as a bottom plate. In such a case, the frame is formed of polypropylene foam.

Measurement of the weight of a vehicle seat having the above-described structure reveals that the weight is reduced 25 to 35% as compared with the case of seats of conventional types. Specifically, a seat (for a scooter) having a conventional structure has a weight of 1,100 to 1,500 g, whereas a similar vehicle seat manufactured to have the structure of the present embodiment has a weight of 800 to 1,100 g.

## Claims

1. A vehicle seat comprising:
a bottom plate (30), a cushion layer (20) formed of polyethylene foam and disposed on the bottom plate (30), and a surface layer (10) covering the cushion layer, **characterized in that** the bottom plate (30) is formed of polypropylene foam and
the surface layer (10) is formed of a laminate containing a layer of a thermoplastic olefinic elastomer (11) and a substrate cloth (12) made of polypropylene fiber.

2. The vehicle seat according to claim 1, wherein the thermoplastic olefinic elastomer is thermoplastic polypropylene elastomer.

3. The vehicle seat according to claim 1, wherein the outer surface of the surface layer (10) is embossed.

4. The vehicle seat according to claim 1, wherein the surface layer (10) is divided into at least two pieces, which form a three dimensional shape.

5. The vehicle seat according to claim 4, wherein the two pieces of the surface layer (10) is jointed together at a ridge line (3) located between a seat surface portion (1) and a side surface portion (2).

6. The vehicle seat according to claim 1, wherein the substrate cloth (12) is formed of a woven fabric of a polypropylene yam made of polypropylene fiber.

7. The vehicle seat according to claim 1, wherein the cushion material is formed of a polyethylene foam which is fabricated through foaming of polyethylene pellets or powder in the presence of a foaming agent.

8. The vehicle seat according to claim 1, wherein the seat is used for a motorcycle, a scooter, a snowmobile, a jet ski, a beach buggy, a mountable-type vehicle, or construction machinery.

## Patentansprüche

1. Fahrzeugsitz, umfassend: eine Bodenplatte (30), eine Kissenschicht (20), geformt aus Polyethylenschaum, welche auf der Bodenplatte (30) befestigt ist, und eine Oberflächenschicht (10), welche die Kissenschicht bedeckt, dadurch charakterisiert, dass
die Bodenplatte (30) aus Polypropylenschaum geformt ist und die Oberflächenschicht (10) aus einem Laminat geformt ist, welches eine Schicht aus einem thermoplastischen Olefinelastomer (11) und ein Substratgewebe: (12) aus Polypropylenfasern enthält.

2. Fahrzeugsitz gemäß Anspruch 1, worin das thermoplastische Olefinelastomer ein thermoplastisches Polypropylenelastomer ist.

3. Fahrzeugsitz gemäß Anspruch 1, worin die äußere Oberfläche der Oberflächenschicht (10) geprägt ist.

4. Fahrzeugsitz gemäß Anspruch 1, worin die Oberflächenschicht (10) in mindestens zwei Teile aufgeteilt ist, welche eine dreidimensionale Form bilden.

5. Fahrzeugsitz gemäß Anspruch 4, worin die beiden Teile der Oberflächenschicht (10) über eine Kantenlinie (3) miteinander verbunden sind, welche sich zwischen einem Sitzoberflächenteil (1) und einem Seitenoberflächenteil (2) befindet.

6. Fahrzeugsitz gemäß Anspruch 1, worin das Substratgewebe (12) aus einem gewebten Stoff aus einem Polypropylengarn, hergestellt aus Polypropylenfasern, besteht.

7. Fahrzeugsitz gemäß Anspruch 1, worin das Kissenmaterial aus einem Polyethylenschaum geformt ist, welcher durch Aufschäumen von Polyethylenpellets oder -pulver in Gegenwart eines Schaumbildners hergestellt wurde.

8. Fahrzeugsitz gemäß Anspruch 1, wobei der Sitz verwendet wird für ein Motorrad, einen Roller, ein Schneemobil, einen Jetski, einen Beach Buggy, ein zusammenbaubares Fahrzeug oder ein Baufahrzeug.

## Revendications

1. Siège de véhicule comprenant :
une plaque d'embase (30), une couche de coussin (20) formée dans une mousse de polyéthylène et disposée sur la plaque d'embase (30), et une couche de surface (10) recouvrant la couche de coussin,
**caractérisé en ce que** la plaque d'embase (30) est formée dans une mousse de polypropylène, et **en ce que** la couche de surface (10) est formée par un stratifié contenant une couche d'un élastomère thermoplastique oléfinique (11) et un tissu de. substrat (12) fabriqué dans une fibre de polypropylène.

2. Siège de véhicule selon la revendication 1, dans lequel l'élastomère thermoplastique oléfinique est un élastomère thermoplastique de polypropylène.

3. Siège de véhicule selon la revendication 1, dans lequel la surface extérieure de la couche de surface (10) est estampée.

4. Siège de véhicule selon la revendication 1, dans lequel la couche de surface (10) est séparée en au moins deux pièces qui ont une forme en trois dimensions.

5. Siège de véhicule selon la revendication 4, dans lequel les deux pièces de la couche de surface (10) sont reliées ensemble sur une ligne d'arête (3) située entre une partie de surface de siège (1) et une partie de surface latérale (2).

6. Siège de véhicule selon la revendication 1, dans lequel le tissu de substrat (12) est formé à partir d'un textile tissé en fil de polypropylène fabriqué à partir d'une fibre de polypropylène.

7. Siège de véhicule selon la revendication 1, dans lequel le matériau de coussin est formé dans une mousse de polyéthylène qui est fabriquée par transformation en mousse de granulés ou de poudre de polyéthylène en présence d'un agent de transformation en mousse.

8. Siège de véhicule selon la revendication 1, dans lequel le siège est utilisé pour un motocycle, un scooter, un scooter des neiges, un et ski, un "buggy" de plage, un véhicule de type pouvant être enfourché, ou un engin de construction.
